# EUROPÄISCHE PATENTANMELDUNG

(11) **EP 4 501 719 A1**
(43) Veröffentlichungstag der Anmeldung: **05.02.2025**
(21) Anmeldenummer: 24188314.9
(22) Anmeldetag: 12.07.2024
(51) Int. Cl.: B60T 7/20, B60T 8/17, B60T 8/88, B60T 17/22, B60W 50/14

(54) **VERFAHREN ZUR WARNUNG EINES FAHRERS EINES FAHRZEUGGESPANNS UND ELEKTRISCHES ANTRIEBSSYSTEM ZUM AUTARKEN ANTRIEB EINES ANHÄNGERFAHRZEUGES EINES FAHRZEUGGESPANNS**

(30) Priorität: 01.08.2023 DE 102023120398
(71) Anmelder: ZF CV Systems Global GmbH, 3006 Bern (CH)
(72) Erfinder: ICKEROTT, Fabian, 48163 Münster Albachten (DE); SONNTAG, Tino, 31595 Steyerberg (DE); KAMINSKI, Jan Leon, 30539 Hannover (DE)
(74) Vertreter: Ohlendorf, Henrike

(57) **Zusammenfassung**

Die Erfindung betrifft ein Verfahren zur Warnung eines Fahrers eines Fahrzeuggespanns (1), bei welchem eine Warnmeldung ausgegeben wird, wenn an einem Anhängerfahrzeug (3) des Fahrzeuggespanns (1) ein Fehler (FF) detektiert wird. Bei einem Verfahren, welches sicherstellt, dass der Fahrer des Fahrzeuggespanns (1) zeitnah und sicher jederzeit über das Auftreten einer Fehlersituation im Anhängerfahrzeug informiert wird, generiert das Anhängerfahrzeug (3) während der Fahrt des Fahrzeuggespanns (1) aus einer Bremsfunktion des Anhängerfahrzeuges (3) eine Warnmeldung als haptische Rückmeldung für den Fahrer.

## Beschreibung

Die Erfindung betrifft ein Verfahren zur Warnung eines Fahrers eines Fahrzeuggespanns, bei welchem eine Warnmeldung ausgegeben wird, wenn an einem Anhängerfahrzeug des Fahrzeuggespanns ein Fehler detektiert wird, sowie ein elektrisches Antriebssystem zum autarken Antrieb eines Anhängerfahrzeuges eines Fahrzeuggespanns.

Die DE 10 2013 222 898 A1 beschreibt ein Verfahren für eine Anzeige von Warnmeldungen von Fahrzeugreifen eines LKW-Anhängers. Wird am LKW-Anhänger ein Reifenproblem erkannt, wird eine Fehlermeldung an das Zugfahrzeug übermittelt, wo diese dem Fahrer durch ein modelliertes Warnlampen-Signal angezeigt wird.

Aus der US 2011/80282 A1 ist ein Verfahren zur Fahrzeugüberwachung bekannt, bei welchem ein Sicherheitssystem oder mehrere Sicherheitssysteme eines Fahrzeuges hinsichtlich eines Sicherheitsproblems überwacht werden. Tritt ein solches Sicherheitsproblem auf, wird mittels drahtloser Kommunikationspfade eine Fehlerinformation an ein Bediengerät, wie ein Smartphone oder ein Mobilfunktelefon, übersandt.

Das US 4,145,682 offenbart einen Kipplastwagen, bei welchem eine gefährliche Kippstellung einer Kippmulde über eine Warnlampe einem Fahrzeugbediener angezeigt wird. Die Warnlampe wird über ein Relais zum Blinken gebracht.

Gemäß der FR 2261904 A ist eine Relaisschaltung bekannt, welche Steuersignale für Warnlampen erzeugt, um diese zum Blinken zu veranlassen. Diese blinkenden Warnlampen zeigen einem Fahrer eines Fahrzeugs an, dass an einem Anhänger des Fahrzeugs ein Fehler detektiert wurde.

Es ist Aufgabe der Erfindung, ein Verfahren zur Warnung eines Fahrers eines Fahrzeuggespanns anzugeben, welches sicherstellt, dass der Fahrer des Fahrzeuggespanns zeitnah und sicher über das Auftreten einer Fehlersituation im Anhängerfahrzeug informiert wird.

Diese Aufgabe wird durch ein Verfahren nach Anspruch 1 gelöst. Danach wird in dem Verfahren zur Warnung eines Fahrers eines Fahrzeuggespanns während einer Fahrt des Fahrzeuggespanns eine Warnmeldung ausgegeben, wenn an einem Anhängerfahrzeug des Fahrzeuggespanns ein Fehler detektiert wird. Die Warnmeldung wird durch das Anhängerfahrzeug während der Fahrt des Fahrzeuggespanns aus einer Bremsfunktion des Anhängerfahrzeuges als haptische Rückmeldung für den Fahrer generiert.

Die Aufgabe wird auch gelöst durch ein elektrisches Antriebssystem zum autarken Antrieb eines Anhängerfahrzeuges eines Fahrzeuggespanns, umfassend eine elektrische Antriebseinheit, die mit einem Bremssteuergerät gekoppelt ist. Das elektrische Antriebssystem gibt über einen Brems-Modulator Bremssignale auf die Räder des Anhängerfahrzeuges aus. Das Bremssteuergerät ist ausgebildet, bei Auftreten eines Fehlers eine haptische Warnmeldung als Rückmeldung an den Fahrer aus der Bremsfunktion des Anhängerfahrzeuges zu generieren.

Dies hat den Vorteil, das Warnmeldungen aus der Antriebsfunktion, insbesondere der Bremsfunktion, des Anhängerfahrzeuges sicher an den Fahrer, der typischerweise der Fahrer eines Zugfahrzeugs des Zugfahrzeuggespanns ist, kommuniziert werden. Die Kommunikation mit dem Fahrer erfolgt parallel oder ersatzweise zum Gebrauch von Anzeigen im Zugfahrzeug. Der Fahrer kann durch die automatisch durch das Anhängerfahrzeug initiierte Bremsung ein deutlich verändertes Fahrverhalten des Fahrzeuganhängers wahrnehmen, ohne dass die Verkehrssicherheit reduziert wird. Dadurch werden Sicherheitslücken aufgrund nicht verfügbarer Fehlerwarninformationen vermieden. Die Aufmerksamkeit des Fahrers bleibt somit immer auf die aktuelle Verkehrssituation gerichtet. Die Fehlerwarnung erreicht den Fahrer im Zugfahrzeug auch dann, wenn eventuell vorhandene außenliegende Warnleuchten am Anhängerfahrzeug bei Kurvenfahrten oder Abbiegevorgängen verdeckt werden und somit für den Fahrer aus dem Blickfeld des Rückspiegels gelangen. Dies gilt auch, wenn die außenliegenden Warnleuchten durch äußere Einflüsse, wie Verschmutzung oder Sonnenblendeinwirkung in ihrer Funktionsweise beeinträchtigt werden. Eine zuverlässige Warnung des Fahrers erfolgt auch, wenn dieser auf Grund der aktuellen Verkehrssituation nicht auf die Instrumententafel blicken kann.

Das Verfahren ist unabhängig von verfügbaren Schnittstellen zwischen dem Zugfahrzeug und dem Anhängerfahrzeug bei den unterschiedlichsten Zugfahrzeug-Anhängerfahrzeug-Kombinationen einsetzbar.

In einer Ausführungsform wird die haptische Rückmeldung durch von dem Bremssystem des Anhängerfahrzeuges erzeugte variierende Bremseingriffe generiert. Diese Bremseingriffe können sowohl zeitlich und/oder in ihrer Intensität variieren und in Abhängigkeit einer sicherheitskritischen Situation, welche durch den detektierten Fehler verursacht wird, eingestellt werden. Dabei kann der Bremseingriff durch intermittierende kurze Bremsereignisse oder Bremsimpulse erfolgen, wie beispielsweise ein "Stotterbremsen", bei welchem kurze ruckartige Bremsbetätigungen realisiert werden. Dabei werden die einzelnen Bremsimpulse hinreichend kurz gewählt, um dem Gesamtsicherheitskonzept des Fahrzeuggespanns zu genügen.

In einer weiteren Ausführungsform werden die kurzen Bremsimpulse durch mindestens einen kurzen Antriebimpuls unterbrochen. Dadurch wird der auf den Fahrer einwirkende haptische Effekt erhöht.

In einer weiteren Ausführungsform werden die kurzen Bremsimpulse unterbrochen, wenn der Fahrer eine Bremse im Zugfahrzeug betätigt. Dadurch wird sichergestellt, dass eine vom Fahrer ausgelöste Bremsung die Auslösung der kurzen Bremsimpulse überstimmt und das Fahrverhalten des Fahrzeuggespanns durch den Fahrer bestimmt wird.

In einer weiteren Ausführungsform wird die haptische Rückmeldung durch ein Abbremsen des Anhängerfahrzeuges auf eine eingeschränkte vorgegebene Geschwindigkeit erzeugt. Durch eine solche permanente Einbremsung wird neben der Warnung des Fahrers gewährleistet, dass das Fahrzeuggespann bei Einhaltung seines Sicherheitskonzeptes beispielsweise noch die nächstliegende Werkstatt erreichen kann.

In einer weiteren Ausführungsform werden als Warnsignal Bremslichter des Anhängerfahrzeugs angesteuert. Zusätzlich können auch Bremslichter des Zugfahrzeugs angesteuert werden. Ein paralleles Ansteuern der Bremslichter des Anhängerfahrzeugs erfüllt die Informationspflicht und somit die Sicherheit gegenüber anderen Verkehrsteilnehmern.

Die haptische Fahrerinformation durch Einbremsen des Anhängerfahrzeuges kann zusätzlich dadurch unterstützt werden, indem akustische und/oder visuelle Signale im Zugfahrzeug und/oder in/am Anhängerfahrzeug ausgegeben werden.

Die hier im Bezug auf das Verfahren beschriebenen Aspekte treffen gleichermaßen auf das offenbarte Antriebssystem zum autarken Antrieb eines Anhängerfahrzeuges eines Fahrzeuggespanns zu, bei dem das Verfahren durch das Bremssteuergerät ausgeführt wird. Dies kann unter Vornahme geeigneter Schreib- und Lesezugriffe auf einem dem Bremssteuergerät zugeordneten Speicher erfolgen. Das Verfahren ist insbesondere innerhalb des Anhängerfahrzeuges in Hardware oder Software oder auch einer Kombination aus Hardware und Software implementiert. Die Hardware umfasst insbesondere digitale Signalprozessoren, anwendungsspezifische integrierte Schaltkreise, Field Programmable Gate Arrays sund/oder weitere geeignete Schalt- und Rechenkomponenten.

Weitere Merkmale, Vorteile und Eigenschaften der Erfindung werden anhand der Beschreibung bevorzugter Ausführungen der Erfindung unter Verweise auf die Figuren erklärt, die zeigen:
- Fig. 1: eine Prinzipdarstellung eines Fahrzeuggespanns mit einem ein Ausführungsbeispiel des erfindungsgemäßen Antriebssystems umfassenden Anhängerfahrzeug,
- Fig. 2: eine schematische Darstellung des erfindungsgemäßen Verfahrens.

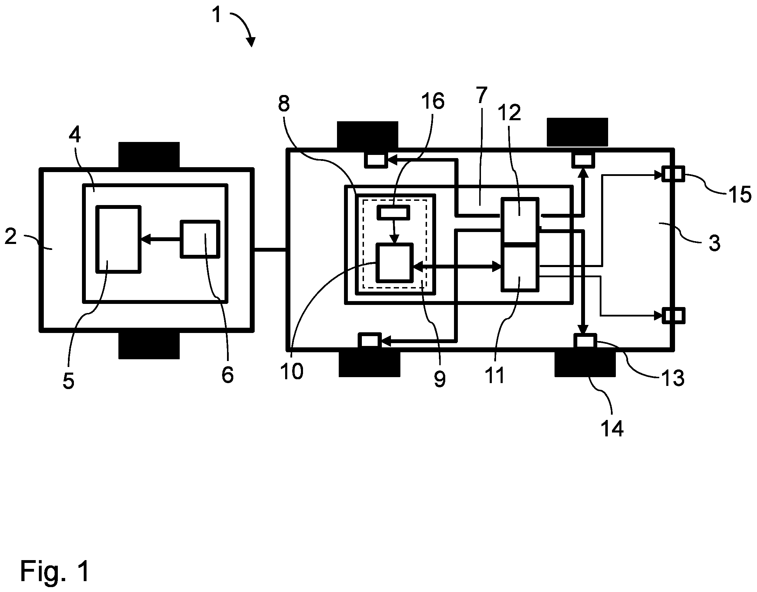

In Fig. 1 ist eine Prinzipdarstellung eines Fahrzeuggespanns mit einem ein Ausführungsbeispiel des erfindungsgemäßen Antriebssystems umfassenden Anhängerfahrzeug 3 dargestellt. Das Fahrzeuggespann 1 umfasst ein angetriebenes Zugfahrzeug 2 und das Anhängerfahrzeug 3, das elektrisch angetrieben ist.

Zum jeweiligen Antrieb umfasst das Zugfahrzeug 2 ein erstes Antriebssystem 4, umfassend einen Motor 5, der als Verbrennungsmotor oder Elektromotor ausgebildet sein kann, und ein erstes Steuergerät 6. Das Anhängerfahrzeug 3 weist ein zweites Antriebssystem 7 auf, welches in der elektrischen Antriebseinheit 8 einen Elektromotor 9 und ein zweites Steuergerät 10 aufweist. Außerdem umfasst das zweite Antriebssystem 7 ein Bremssteuergerät 11, welches mit einem Brems-Modulator 12 gekoppelt ist, um Bremsaktoren 13, die den einzelnen Rädern 14 des Anhängerfahrzeuges 3 zugeordnet sind, anzusteuern, um diese abzubremsen. Die Bremsaktoren 13 sind dazu in einem Druckluftsystem angeordnet, welches der Übersichtlichkeit halber nicht weiter dargestellt ist. Bei Durchführung eines Bremsvorganges des Anhängerfahrzeuges 3 werden an der Rückseite des Anhängerfahrzeuges 3 positionierte Bremsleuchten 15 angesteuert, welche dem nachfolgenden Verkehr anzeigen, dass das Fahrzeuggespann 1 abbremst.

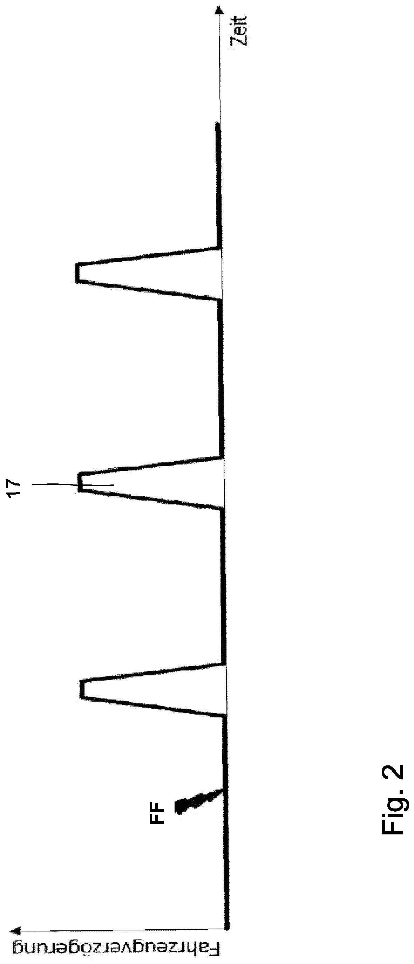

In der elektrischen Antriebseinheit 8 ist das zweite Steuergerät 10 mit einer Fehlererkennungseinheit 16 verbunden, welche eine Funktion des Elektromotors 9 während der Fahrt des Fahrzeuggespanns 1 überwacht. Erkennt die Fehlererkennungseinheit 16 eine Fehlfunktion des Elektromotors 9, wird dies sofort an das zweite Steuergerät 10 weitergeleitet, welches eine Warnmeldung für den im Zugfahrzeug 2 sitzenden Fahrer des Fahrzeuggespanns 1 ausgibt. Diese Warnmeldung wird initiiert, indem das zweite Steuergerät 10 ein Warnsignal an das Bremssteuergerät 11 ausgibt, welches daraufhin über den Bremsmodulator 12 intermittierende kurze Bremsereignisse einleitet, um die Aufmerksamkeit des Fahrers auf sich zu ziehen. Solche intermittierende Bremsereignisse sind auch als sogenanntes "Stotterbremsen" bekannt, bei welchem kurze ruckartige Bremsbetätigungen von dem Anhängerfahrzeug 3 ausgeführt werden. Fig. 2 zeigt ein Ausführungsbeispiel für diese als Bremsimpulse 17 ausgeführten ruckartigen Bremsbetätigungen, die einsetzen, wenn eine Fehlfunktion FF erkannt wurde. Ein möglicher Verlauf der Bremsimpulse 17 ist als Fahrzeugverzögerung über der Zeit dargestellt.

Eine weitere Möglichkeit der Warnung des Fahrers kann auch darin bestehen, dass das Bremssteuergerät 11 ein Signal zur permanenten Einbremsung des Anhängerfahrzeuges 3 auf eine eingeschränkte maximale Fahrzeuggeschwindigkeit ausgibt. Ebenso ist es denkbar, dass zwischen den Bremsimpulsen 17 ein kurzer Antriebsimpuls am Elektromotor 9 erzeugt wird.

Ein paralleles Ansteuern der Bremsleuchten 15 warnt andere Verkehrsteilnehmer und erhöht somit die Sicherheit im Straßenverkehr. Neben der haptischen Fahrerinformation durch Einbremsen des Anhängerfahrzeuges 3 können zusätzlich akustische und/oder visuelle Signale im Zugfahrzeug 2 und/oder am Anhängerfahrzeug 3 erzeugt werden, um die Aufmerksamkeit des Fahrers für eine Gefahrensituation zu erhöhen.

### Bezugszeichen (Teil der Beschreibung)

- 1: Fahrzeuggespann
- 2: Zugfahrzeug
- 3: Anhängerfahrzeug
- 4: erstes Antriebssystem
- 5: Motor
- 6: erstes Steuergerät
- 7: zweites Antriebssystem
- 8: elektrische Antriebseinheit
- 9: Elektromotor
- 10: zweites Steuergerät
- 11: Bremssteuergerät
- 12: Bremsmodulator
- 13: Bremsaktor
- 14: Rad
- 15: Bremsleuchte
- 16: Fehlererkennungseinheit
- 17: Bremsimpuls
- FF: Fehlfunktion

## Patentansprüche

1. Verfahren zur Warnung eines Fahrers eines Fahrzeuggespanns (1) während einer Fahrt des Fahrzeuggespanns (1), bei welchem eine Warnmeldung ausgegeben wird, wenn an einem Anhängerfahrzeug (3) des Fahrzeuggespanns (1) ein Fehler (FF) detektiert wird, **dadurch gekennzeichnet, dass** das Anhängerfahrzeug (3) während der Fahrt des Fahrzeuggespanns (1) aus einer Bremsfunktion des Anhängerfahrzeuges (3) die Warnmeldung als haptische Rückmeldung für den Fahrer generiert.

2. Verfahren nach Anspruch 1, **dadurch gekennzeichnet, dass** die haptische Rückmeldung durch von einem autarken Bremssystem (12, 13) des Anhängerfahrzeuges (3) erzeugte variierende Bremseingriffe generiert wird.

3. Verfahren nach Anspruch 2, **dadurch gekennzeichnet, dass** die Bremseingriffe intermittierende kurze Bremsimpulse (17) umfassen.

4. Verfahren nach Anspruch 3, **dadurch gekennzeichnet, dass** zwischen den Bremsimpulsen (17) mindestens ein kurzer Antriebimpuls erzeugt wird.

5. Verfahren nach Anspruch 1, **dadurch gekennzeichnet, dass** die haptische Rückmeldung durch ein eigenständiges Abbremsen des Anhängerfahrzeuges (3) auf eine eingeschränkte vorgegebene Geschwindigkeit erzeugt wird.

6. Verfahren nach einem der vorhergehenenden Ansprüche, **dadurch gekennzeichnet, dass** als Warnsignal für andere Verkehrsteilnehmer Bremsleuchten (15) des Anhängerfahrzeuges (3) angesteuert werden.

7. Verfahren nach einem der vorhergehenden Ansprüche, **dadurch gekennzeichnet, dass** als Rückmeldung an den Fahrer in einem Zugfahrzeug (2) des Fahrzeuggespanns (1) ein optisches und/oder akustisches Signal ausgegeben wird.

8. Verfahren nach einem der vorhergehenden Ansprüche, **dadurch gekennzeichnet, dass** die Ausgabe der Warnmeldung unterbrochen wird, wenn diese von einem vom Fahrer ausgelösten Bremswunsch überstimmt wird.

9. Elektrisches Antriebssystem zum autarken Antrieb eines Anhängerfahrzeuges (3) eines Fahrzeuggespanns (1), umfassend eine elektrische Antriebseinheit (8), die mit einem Bremssteuergerät (11) gekoppelt ist, welches über einen Brems-Modulator (12) Bremssignale auf Räder (14) des Anhängerfahrzeuges (3) ausgibt, **dadurch gekennzeichnet, dass** das Bremssteuergerät (11) ausgebildet ist, bei Auftreten eines Fehlers (FF) eine haptische Warnmeldung als Rückmeldung an den Fahrer aus einer Bremsfunktion des Anhängerfahrzeuges (3) zu generieren.

10. Elektrisches Antriebssystem nach Anspruch 9, **dadurch gekennzeichnet, dass** das Bremssteuergerät (11) ausgebildet ist, als Warnmeldung variierende, insbesondere intermittierende, Bremsimpulse (17) auszulösen.

11. Elektrisches Antriebssystem nach Anspruch 9 oder 10, **dadurch gekennzeichnet, dass** das Bremssteuergerät (11) ausgebildet ist, als Warnmeldung das Anhängerfahrzeug (3) auf eine eingeschränkte vorgegebene Geschwindigkeit abzubremsen.

12. Elektrisches Antriebssystem nach Anspruch 9, 10 oder 11, **dadurch gekennzeichnet, dass** das Bremssteuergerät (11) mit einer Steuereinheit (10) der Antriebseinheit (8) zur Erzeugung kurzer Antriebsimpulse während eines oder des als Warnmeldung initiierten Bremsvorganges gekoppelt ist.

13. Elektrisches Antriebssystem nach mindestens einem der Ansprüche 9 bis 12, **dadurch gekennzeichnet, dass** das Bremssteuergerät (11) ausgebildet ist, die Ausgabe der Warnmeldung zu unterbrechen, wenn diese von einem vom Fahrer ausgelösten Bremswunsch überstimmt wird.
